# EUROPÄISCHE PATENTSCHRIFT

(11) **EP 1 564 422 B1**
(45) Veröffentlichungstag und Bekanntmachung des Hinweises auf die Patenterteilung: **07.02.2007**
(21) Anmeldenummer: 05002010.6
(22) Anmeldetag: 01.02.2005
(51) Int. Cl.: F16B 25/00

(54) **Verfahren und Schraube zum Verbinden zweier Bauteile einer Reibkupplung**
Procedure and screw for connecting two construction units of a friction coupling
Procédé et vis pour relier deux unités de construction d'un embrayage de frottement

(30) Priorität: 14.02.2004 DE 102004007338
(43) Veröffentlichungstag der Anmeldung: 17.08.2005
(73) Patentinhaber: LuK Lamellen und Kupplungsbau Beteiligungs KG, 77815 Bühl (DE)
(72) Erfinder: Birk, Albert, 77830 Bühl (DE)

(56) Entgegenhaltungen:
- EP-A- 0 004 541
- DE-A1- 19 524 827
- GB-A- 1 357 720
- US-A- 3 537 288
- US-A- 3 918 345
- US-A- 4 529 826

## Beschreibung

Die Erfindung betrifft ein Verfahren zur Bildung einer Schraubverbindung zwischen zwei Bauteilen, wobei eines der Bauteile aus Gusseisen-Werkstoff besteht und dieses Gussbauteil zumindest mit einer Verschraubungsausnehmung versehen ist.

Derartige Verbindungen sind bekannt und finden auch Anwendung im Automobilbau, wobei die in das Gussbauteil vorgebohrten Verschraubungsausnehmungen mit Gewinden versehen werden, welche mittels Gewindeschneider, also durch spanabhebende Bearbeitung, hergestellt werden.

Der vorliegenden Erfindung lag die Aufgabe zugrunde, ein Verfahren zur Bildung einer Schraubverbindungen der eingangs genannten Art zu schaffen, das gewährleistet, dass die Schraubverbindungen in besonders einfacher und kostengünstiger Art und Weise herstellbar sind. Es soll auch durch entsprechende Ausgestaltung der Schraubverbindungen und Optimierung der Verfahrensweise zur Herstellung derartiger Schraubverbindungen deren Einsatz in der Großserienherstellung erleichtert werden. Durch die Erfindung soll auch die Herstellung und die Ausgestaltung des zu verbindenden Gussbauteils vereinfacht werden, wobei auch der Werkzeugeinsatz und der Bearbeitungsaufwand zur Herstellung derartiger Gussbauteile verringert werden soll.

Gemäß der Erfindung wird dies dadurch erzielt, dass die zumindest eine Verschraubungsausnehmung vor Herstellung der Verbindung keine Gewindeprofilierung aufweist, und die Verbindung zwischen den beiden Bauteilen erfolgt, indem die Schraube in einer entsprechenden Ausnehmung des zweiten Bauteils aufgenommen und in die Verschraubungsausnehmung eingeschraubt wird, wobei zumindest ein Gewindebereich der Schraube kegelstumpfförmig ausgebildet und partiell mit einem die Bildung des Gewindes im Gussbauteil unterstützenden Mittel beschichtet ist und die Gewindeform der Schraube derart ausgebildet ist, dass in der Verschraubungsausnehmung ein Gewinde durch Materialverdrängung (Materialfluss) hergestellt wird. Es wird also gemäß der Erfindung das Gewinde im Gussmaterial nicht geschnitten, also spanabhebend hergestellt, sondern die Bildung der Gewindegänge erfolgt durch Materialfluss, also Verdrängen des Gusswerkstoffes. Eine derartige Ausgestaltung hat den Vorteil, dass die so hergestellten Gewinde eine hohe Festigkeit aufweisen. Für viele Anwendungsfälle kann auf zusätzliche Mittel zur Sicherung der Schrauben innerhalb der Gewindebohrung verzichtet werden.

Durch die EP 0004541 A1 sind zwar Gewindeformschrauben bekannt geworden, wobei diese jedoch für die Verwendung bei Werkstücken aus Metall oder Kunststoff, die elastische Materialeigenschaften besitzen, verwendet werden. Diese Entgegenhaltung konnte somit keinerlei Hinweis in Richtung einer Verwendung von Gewindeformschrauben in Verbindung mit einem verhältnismäßig spröden Material, wie Gusseisen, geben. Auch ist in dieser Druckschrift keinerlei Hinweis bezüglich einer Beschichtung des Gewindes der Schraube vorhanden. Eine ähnliche Lehre ist in der US 3,537,288 enthalten. Auch in dieser Druckschrift wird darauf hingewiesen, dass die darin beschriebenen Schrauben bei Bauteilen aus Stahl mit geringem Kohlenstoffanteil Verwendung finden sollen. Durch die US 3,918,345 sind ebenfalls Gewindeformschrauben vorgeschlagen worden, wobei jedoch in dieser Druckschrift keinerlei Hinweis bezüglich einer Beschichtung des Gewindes der Schraube mit einem Mittel, das die Bildung des Gewindes in einem Gussbauteil unterstützt, enthalten ist. Zusammenfassend ist festzustellen, dass es zu dem hier betroffenen Gebiet einen sehr umfangreichen Stand der Technik gibt, wobei jedoch die erfindungsgemäße Merkmalskombination, welche eine einwandfreie Bildung von Gewinden durch Materialverdrängung in Gussbauteilen ermöglicht, in keiner Weise nahe gelegt wurde.

Zweckmäßig kann es sein, wenn der kegelstumpfförmige Gewindeendbereich der Schraube einen Kegelwinkel in der Größenordnung zwischen 10° und 20°, vorzugsweise zwischen 14° und 17° aufweist. Eine derartige kegelstumpfförmige Ausbildung des Schraubenendes ermöglicht ein einfaches Einfädeln sowie einen anfänglichen guten Sitz in der Verschraubungsausnehmung. Dadurch wird auch eine stabile Seitenführung gewährleistet, so dass ein Verkanten beim Eindrehen der Schraube vermieden werden kann. Dies ist insbesondere bei einer automatisierten Montage von Vorteil.

Es kann auch zweckmäßig sein, wenn die Verschraubungsausnehmung eine Einfädelungsschräge aufweist. Für manche Anwendungsfälle kann es zweckmäßig sein, wenn die Verschraubungsausnehmung über einen geringen Längenerstreckungsbereich einen etwas größeren Durchmesser aufweist als die übrigen Bereiche dieser Ausnehmung. Dies kann beispielsweise durch eine abgestufte Ausnehmung gewährleistet werden.

In vorteilhafter Weise kann der ursprüngliche Durchmesser einer Verschraubausnehmung 85 % bis 95 %, vorzugsweise 88 % bis 93 % des Gewindeaußendurchmessers der Schraube aufweisen.

Um das Einschraubmoment zu verringern ist es zweckmäßig, wenn zur Beschichtung der Schraube ein Gleit- oder Schmiermittel verwendet wird. Ein derartiges Mittel kann kurz vor bzw. während des Einschraubens zugeführt werden. Erfindungsgemäß ist es jedoch besonders vorteilhaft, wenn Schrauben zum Einsatz kommen, die vorab bereits zumindest partiell mit einer das Eindrehen der Schrauben und das Formen der Einschraubgewinde verbessernden Beschichtung versehen sind. Als besonders vorteilhaft hat sich der Einsatz von Schrauben erwiesen, die zumindest im Endbereich ihres Gewindes mit Paraffin beschichtet sind. Anstatt Paraffin können jedoch auch andere Schmier- bzw. Gleitmittel verwendet werden, wie z. B. Fett. Alternativ können auch Kleber- bzw. Dichtmittel Verwendung finden, welche zunächst eine Gleit- bzw. Schmierfunktion übernehmen können und erst nachträglich aushärten. Derartige Eigenschaften können beispielsweise durch Mikrokapseln innerhalb des verwendeten Beschichtungsmittels gewährleistet werden, die beim Eindrehen zerstört werden, wodurch ein Reaktionsmittel freigegeben wird.

In vorteilhafter Weise kann zumindest der Gewindebereich der Schrauben eine hohe Härte aufweisen, letzteres kann beispielsweise durch Verwendung von einsatzgehärteten Schrauben oder aber durch vergütete Schrauben gewährleistet werden. Derartige Schrauben können beispielsweise induktiv gehärtete Gewindeformzonen aufweisen.

In vorteilhafter Weise kann das Gussbauteil aus Grauguss bestehen. Je nach Anwendungsfall kann es dabei zweckmäßig sein, wenn Gusseisen mit Vermikulargraphit (GGV) oder Kugelgraphit (GGG) oder Lamellengraphit (GGL) verwendet wird. In vorteilhafter Weise kann beispielsweise GGV 30 verwendet werden.

Erfindungsgemäß ausgestaltete bzw. hergestellte Schraubverbindungen können in besonders vorteilhafter Weise bei Drehmomentübertragungsvorrichtungen Verwendung finden, welche zwischen einer Brennkraftmaschine und einem nachgeschalteten Getriebe zum Einsatz kommen können. Das Gussbauteil kann dabei in vorteilhafter Weise die Gegendruckplatte eines Kupplungsaggregates bilden, auf der mittels der gewindeformenden bzw. gewindefurchenden Schrauben das Gehäuse einer Reibungskupplung befestigt ist. Diese Gegendruckplatte kann die Sekundärmasse eines so genannten Zweimassenschwungrades bilden.

Entsprechende Kupplungsaggregate bzw. Zweimassenschwungräder sind beispielsweise durch die DE 197 27 678 C2, DE 195 06 157 A1, DE 100 58 884 A1 oder DE 37 21 712 A1 bekannt geworden.

Die erfindungsgemäße Ausgestaltung bzw. Herstellung einer Schraubverbindung mit einem Gussbauteil ermöglicht eine erhebliche Reduzierung der notwendigen Herstellungswerkzeuge, da die üblicherweise zum Schneiden der Gewinde erforderlichen Gewindeschneidwerkzeuge sowie die dazugehörigen Maschinen entfallen können. Weiterhin wird dadurch gewährleistet, dass in den entsprechenden Bohrungen keine Schneidspäne zurückbleiben können, die während der folgenden Montage des zu bildenden Gesamtaggregates, z. B. während des handlings der Bauteile aus den Gewindebohrungen herausfallen und schädliche Auswirkungen haben können.

Anhand der Figuren sei die Erfindung näher erläutert.

Dabei zeigt:
- Figur 1: einen teilweisen Schnitt einer Baugruppe, in der eine erfindungsgemäße Schraubverbindung dargestellt ist, wobei es sich bei der hier dargestellten Baugruppe um ein so genanntes Zweimassenschwungrad handelt, auf dem unter Zwischenlegung einer Kupplungsscheibe eine Reibungskupplung montiert ist.
- Figur 2: zeigt eine Einzelheit der Figur 1, wobei die beiden zu verschraubenden Bauteile der beiden Unterbaugruppen bereits verschraubungsgerecht zusammengefügt sind, die Schraube jedoch noch nicht eingedreht ist.

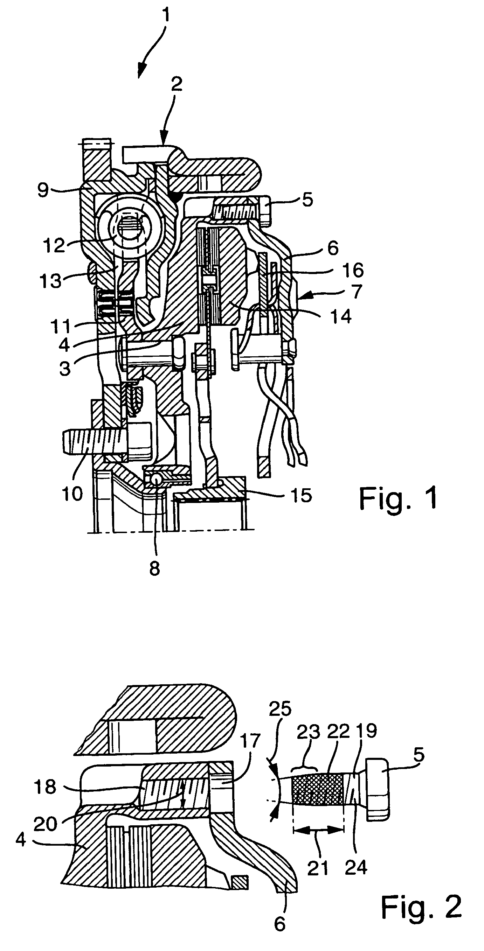

Die in Figur 1 dargestellte Baugruppe 1 umfasst ein so genanntes Zweimassenschwungrad 2, die eine Sekundärmasse 3 mit einem Bauteil 4 aus Eisengusswerkstoff aufweist. Das Gussbauteil 4 ist mittels einer Mehrzahl von über den Umfang verteilten Schraubverbindungen 5 mit dem Gehäuse 6 einer Reibungskupplung 7 verbunden.

Die Sekundärschwungmasse 3 ist über eine Lagerung 8 auf einer Primärschwungmasse 9 verdrehbar gelagert. Die Primärschwungmasse 9 ist über Schrauben 10 mit einer nicht näher dargestellten Abtriebswelle einer Brennkraftmaschine verbindbar.

Bei dem dargestellten Ausführungsbeispiel ist das aus Gusseisen hergestellte Bauteil 4 mit einem Flansch 11 verbunden, der radial außen Beaufschlagungsbereich für Energiespeicher 12 aufweist, die Bestandteil eines zwischen den beiden Schwungmassen 3 und 4 angeordneten Drehschwingungsdämpfers sind. Die Bauteile der Primärschwungmasse 9 begrenzen einen ringförmigen Raum 13, in dem die durch die Schraubendruckfedern 12 gebildeten Energiespeicher aufgenommen sind.

Bezüglich der möglichen Ausgestaltung der Wirkungsweise von Zweimassenschwungrädern wird beispielsweise auf den bereits angeführten Stand der Technik verwiesen.

Die mit dem Gussbauteil 4 verschraubte Reibungskupplung 7 besitzt eine Anpressplatte 14, die mit dem Gehäuse 6 drehfest, jedoch begrenzt axial verlagerbar verbunden ist. Axial zwischen der Anpressplatte 14 und einer Reibfläche des Gussbauteils 4 sind die Reibbeläge einer Kupplungsscheibe 15 eingespannt. In an sich bekannter Weise kann eine so genannte Belagfederung zwischen den Reibbelägen der Kupplungsscheibe 15 vorgesehen sein. Am Gehäuse 6 ist eine Anpresstellerfeder 16 verschwenkbar gelagert, welche die Anpressplatte 14 beaufschlagt.

Bezüglich der möglichen Ausgestaltung von Reibungskupplungen wird beispielsweise auf die DE 195 47 559 A1, DE 195 24 827 A1 oder die DE 42 44 919 A1 sowie den in diesen angegebenen Stand der Technik verwiesen.

Wie insbesondere aus Figur 2 zu entnehmen ist, wird das Kupplungsgehäuse 6 mit dem Bauteil 4 aus Gusseisen mittels Schrauben 5 verbunden. Eine derartige Schraube 5 wird zunächst in eine Ausnehmung 17 des Kupplungsgehäuses 6 eingeführt und dann in eine Verschraubungsausnehmung 18 des Gussbauteils 4 eingedreht. Wie aus Figur 2 ebenfalls zu entnehmen ist, ist die Verschraubungsausnehmung 18, in welche die Schraube 5 eingedreht wird, glatt, also ohne Gewindeprofilierung ausgebildet. Eine derartige Verschraubungsausnehmung 18 kann beispielsweise durch einfaches Bohren hergestellt werden. Die Schraube 5 besitzt ein Gewinde 19, das derart ausgebildet ist, dass beim Eindrehen der Schraube 5 in die Verschraubungsausnehmung 18 im Bereich der Wandung dieser Ausnehmung 18 ein Materialfluss bzw. eine Materialverdrängung stattfindet, wodurch ein Gewinde gebildet wird. Die Schraube 5 ermöglicht also eine spanfreie Herstellung eines Gewindes innerhalb der Ausnehmung 18.

Um das Furchen bzw. Ausformen des innerhalb einer Verschraubungsausnehmung entstehenden Gewindes zu begünstigen, ist es vorteilhaft, wenn der Ausnehmungsdurchmesser 20 gegenüber dem üblicherweise einem bestimmten Schraubengewinde zugeordneten Bohrungsdurchmesser etwas größer dimensioniert ist. Vorteilhaft ist es, wenn die Einschraubausnehmung 18 ursprünglich einen Durchmesser besitzt, der in der Größenordnung von 85 % bis 95 % des Gewindeaußendurchmessers der Schraube 5 liegt. Als vorteilhaft hat es sich erwiesen, wenn der ursprüngliche Ausnehmungsdurchmesser 20 88 % bis 93 % des Gewindeaußendurchmessers der Schraube aufweist. Durch eine derartige Abstimmung kann auch das zum Einschrauben einer Schraube 5 erforderliche Drehmoment auf ein akzeptables Maß gebracht werden.

Um das Einschraubmoment sowie die Verformungsarbeit innerhalb des Gusseisens zu reduzieren, kann es besonders zweckmäßig sein, wenn das Gewinde 19 der Schraube 5 zumindest über eine Teillänge 21 mit einer das Eindrehen der Schraube 5 und das Formen des Einschraubgewindes verbessernden Beschichtung versehen ist. Zweckmäßig kann es zum Beispiel sein, wenn das Gewinde oder gar die ganze Schraube phosphatiert ist. Zusätzlich oder alternativ hierzu kann auch zumindest über eine Teillänge 21 ein Schmier- bzw. Gleitmittel 22 aufgebracht sein. Hierfür kann beispielsweise ein Gleitlack oder ein Fett verwendet werden. Besonders vorteilhaft ist es, wenn die Teillänge 21 des Schraubengewindes 19 mit Paraffin beschichtet ist. Eine derartige Beschichtung kann in besonders einfacher Weise mittels eines Tauchverfahrens aufgebracht werden. Paraffin hat auch eine ausreichende Zähigkeit bzw. Festigkeit, so dass gewährleistet ist, dass auch während des Transportes der bereits beschichtet angelieferten Schrauben die Paraffinbeschichtung erhalten bleibt.

Durch die erfindungsgemäße Ausgestaltung einer Schraubverbindung wird also gewährleistet, dass auch in einem verhältnismäßig spröden Werkstoff ein Gewinde durch Materialumformung gebildet werden kann.

Durch die erfindungsgemäßen Schraubverbindungen kann das üblicherweise bei Gussbauteilen erforderliche Gewindeschneiden entfallen.

Da die verwendeten Schrauben das Einschraubgewinde in der Aufnahmeausnehmung selbst formen, wird auch verhindert, dass bereits vorgeschnittene Gewinde durch verkantetes Einschrauben beschädigt bzw. zerstört werden können.

Wie aus Figur 2 weiterhin ersichtlich ist, besitzt der Endbereich 23 des Gewindeschaftes 24 eine kegelstumpfförmige Ausgestaltung, welche gewährleistet, dass beim Einstecken der Schraube 5 in die Ausnehmungen 17 und 18 bereits eine axiale Ausrichtung und seitliche Führung der Schraube 5 vorhanden ist, wodurch ein einwandfreies Eindrehen der Schraube 5 ermöglicht wird. In vorteilhafter Weise kann der Kegelwinkel 25 des kegelstumpfförmigen Bereiches 23 in der Größenordnung zwischen 12° und 20° liegen, vorzugsweise in der Größenordnung zwischen 14° und 17°.

### Bezugszeichenliste

- 1: Baugruppe
- 2: Zweimassenschwungrad
- 3: Sekundärmasse
- 4: Gussbauteil
- 5: Schraubverbindung
- 6: Gehäuse
- 7: Reibungskupplung
- 8: Lagerung
- 9: Primärschwungmasse
- 10: Schrauben
- 11: Flansch
- 12: Energiespeicher
- 13: Raum
- 14: Anpressplatte
- 15: Kupplungsscheibe
- 16: Anpresstellerfeder
- 17: Ausnehmung
- 18: Verschraubungsausnehmung
- 19: Gewinde
- 20: Ausnehmungsdurchmesser
- 21: Teilläng
- 22: Gleitmittel
- 23: Endbereich
- 24: Gewindeschaft
- 25: Kegelwinkel

## Patentansprüche

1. Verfahren zur Bildung einer Schraubverbindung, enthaltend wenigstens zwei Bauteile (4, 6) und eine Schraube (5), wobei ein Bauteil (4) aus Gusseisen-Werkstoff besteht und dieses Gussbauteil zumindest mit einer Verschraubungsausnehmung (18) versehen ist, die vor Herstellung der Verbindung keine Gewindeprofilierung aufweist, und die Verbindung zwischen den beiden Bauteilen (4, 6) erfolgt, indem die Schraube in einer entsprechenden Ausnehmung (17) des zweiten Bauteils (6) aufgenommen und in die Verschraubungsausnehmung (18) eingeschraubt wird, wobei zumindest ein Gewindebereich (23) der Schraube (5) kegelstumpfförmig ausgebildet und partiell mit einem die Bildung des Gewindes im Gussbauteil unterstützenden Mittel (22) beschichtet ist und die Gewindeform der Schraube derart ausgebildet ist, dass in der Verschraubungsausnehmung ein Gewinde durch Materialverdrängung (Materialfluss) hergestellt wird.

2. Verfahren nach Anspruch 1, **dadurch gekennzeichnet, dass** die Verschraubungsausnehmungen (18) im Gussbauteil (4) einen Durchmesser (20) aufweisen, der 85 % bis 95 %, vorzugsweise 88 % bis 93 % des Gewindeaußendurchmessers der Schraube aufweist.

3. Verfahren nach Anspruch 1, **dadurch gekennzeichnet, dass** das Gewinde der Schraube zumindest partiell mit einem Gleitmittel (22) versehen ist.

4. Verfahren nach Anspruch 1 bis 3, **dadurch gekennzeichnet, dass** die Schrauben zumindest im Endbereich des Gewindes mit Paraffin (22) beschichtet sind.

5. Verfahren nach einem der vorhergehenden Ansprüche, **dadurch gekennzeichnet, dass** das Gussbauteil (4) aus Grauguss besteht.

6. Verfahren nach einem der vorhergehenden Ansprüche, **dadurch gekennzeichnet, dass** das Gussbauteil (4) aus Gusseisen mit Vermikulargraphit (GGV) oder Kugelgraphit (GGG) oder Lamellengraphit (GGL) besteht.

7. Kupplungsaggregat bestehend aus wenigstens einer Gegendruckplatte (4), wie z. B. einem Schwungrad, auf der unter Zwischenlegung wenigstens einer Kupplungsscheibe (15) eine Reibungskupplung (7) verschraubt ist, **dadurch gekennzeichnet, dass** die Schraubverbindungen gemäß einem der Ansprüche 1 bis 6 ausgebildet sind.

8. Kupplungsaggregat nach Anspruch 7, **dadurch gekennzeichnet, dass** die Gegendruckplatte (4) die Sekundärmasse (3) eines Zweimassenschwungrades (1) bildet.

9. Kupplungsaggregat nach Anspruch 7 oder 8, **dadurch gekennzeichnet, dass** zumindest die Gegendruckplatte und die darauf verschraubte Reibungskupplung eine Montageeinheit bilden, die als solche mit der Abtriebswelle einer Brennkraftmaschine verbindbar ist.

## Claims

1. A method for forming a screwed connection, containing at least two parts (4, 6) and a screw (5), where one part (4) is made of cast iron material and this cast part is provided with at least one screw recess (18) that has no threading profile before the connection is made, and the connection between the two parts (4, 6) is made by the screw being received in an appropriate recess (17) of the second part (6) and being screwed into the screw recess (18), where at least a portion of the threading (23) of the screw (5) has the shape of a truncated cone and is partially coated with an agent (22) that supports the formation of the thread in the cast part, and the shape of the thread of the screw is such that threading is produced in the screw recess by displacement of material (material flow).

2. The method according to Claim 1, **characterized in that** the screw recesses (18) in the cast part (4) have a diameter (20) that is 85% to 95%, preferably 88% to 93% of the outer thread diameter of the screw.

3. The method according to Claim 1, **characterized in that** the screw is at least partially provided with a lubricating agent (22).

4. The method according to Claims 1 through 3, **characterized in that** the screws are coated at least in the end area of the thread with paraffin (22).

5. The method according to one of the preceding claims, **characterized in that** the cast part (4) is made of gray cast iron.

6. The method according to one of the preceding claims, **characterized in that** the cast part (4) is made of cast iron with vermicular graphite (GGV) or nodular graphite (GGG) or graphite flakes (GGL).

7. A clutch unit made up of at least one counter-pressure plate (4), such as for example a flywheel onto which a friction clutch (7) is screwed, with at least one clutch plate (15) interposed, **characterized in that** the screw connections are formed according to one of Claims 1 through 6.

8. The clutch unit according to Claim 7, **characterized in that** the counter-pressure plate (4) forms the secondary mass (3) of a dual mass flywheel (1).

9. The clutch unit according to Claim 7 or 8, **characterized in that** at least the counter-pressure plate and the friction clutch screwed to it form an assembly unit that is connectable as such to the output shaft of a combustion engine.

## Revendications

1. Procédé pour former une liaison d'assemblage à vis, comprenant au moins deux pièces (4, 6) et une vis (5), l'une (4) des pièces étant réalisée en un matériau de fonte de moulage et cette pièce en fonte étant pourvue d'au moins un évidement de vissage (18) qui ne présente pas de profilage de filetage avant l'établissement de la liaison d'assemblage, et la liaison d'assemblage entre les deux pièces (4, 6) étant effectuée par le fait que la vis est placée dans un évidement (17) approprié de la deuxième pièce (6) et est vissée dans l'évidement de vissage (18), le procédé prévoyant qu'au moins une zone de filetage (23) de la vis (5) est d'une configuration de forme tronconique et est revêtue partiellement d'un moyen ou agent (22) contribuant à la formation du filetage ou taraudage dans la pièce en fonte, et la forme du filetage de la vis étant conçue de façon telle que dans l'évidement de vissage soit réalisé un filetage ou taraudage par refoulement de matière (flux de matière).

2. Procédé selon la revendication 1, **caractérisé en ce que** les évidements de vissage (18) dans la pièce en fonte (4) présentent un diamètre (20) qui vaut de 85% à 95%, de préférence de 88% à 93% du diamètre extérieur du filetage de la vis.

3. Procédé selon la revendication 1, **caractérisé en ce que** le filetage de la vis est revêtu au moins partiellement d'un agent antifriction (22).

4. Procédé selon les revendications 1 à 3, **caractérisé en ce que** les vis sont revêtues de paraffine (22), au moins dans la zone d'extrémité du filetage.

5. Procédé selon l'une des revendications précédentes, **caractérisé en ce que** la pièce en fonte (4) est réalisée en fonte grise.

6. Procédé selon l'une des revendications précédentes, **caractérisé en ce que** la pièce en fonte (4) est réalisée en fonte à graphite vermiculaire (GGV), ou à graphite sphéroïdal (GGG) ou à graphite lamellaire (GGL).

7. Groupe d'embrayage constitué d'au moins un plateau de pression conjugué (4), tel qu'un volant d'inertie, sur lequel est vissé, avec interposition d'au moins un disque d'embrayage (15), un embrayage à friction (7), **caractérisé en ce que** les liaisons d'assemblage à vis sont conçues selon l'une des revendications 1 à 6.

8. Groupe d'embrayage selon la revendication 7, **caractérisé en ce que** le plateau de pression conjugué (4) forme la masse secondaire (3) d'un volant d'inertie à deux masses (1).

9. Groupe d'embrayage selon la revendication 7 ou 8, **caractérisé en ce qu'**au moins le plateau de pression conjugué et l'embrayage à friction qui y est vissé, forment une unité de montage, qui peut être reliée en tant que telle, à l'arbre de sortie d'entraînement d'un moteur à combustion interne.
